# EUROPÄISCHE PATENTSCHRIFT

(11) **EP 3 954 255 B1**
(45) Veröffentlichungstag und Bekanntmachung des Hinweises auf die Patenterteilung: **02.07.2025**
(21) Anmeldenummer: 21189386.2
(22) Anmeldetag: 03.08.2021
(51) Int. Cl.: A47C 20/08, A47C 20/04

(54) **ELEKTROMOTORISCH VERSTELLBARE STÜTZEINRICHTUNG**
SUPPORT DEVICE ADJUSTABLE WITH AN ELECTRIC MOTOR
DISPOSITIF D'APPUI À RÉGLAGE PAR MOTEUR ÉLECTRIQUE

(30) Priorität: 12.08.2020 DE 202020104670 U; 01.04.2021 DE 202021101760 U; 01.04.2021 DE 102021108368
(43) Veröffentlichungstag der Anmeldung: 16.02.2022
(73) Patentinhaber: de Werth Group AG, 8002 Zürich (CH)
(72) Erfinder: Dewert, Eckhart, 8638 Goldingen (CH)
(74) Vertreter: Hoefer & Partner Patentanwälte mbB

(56) Entgegenhaltungen:
- US-A1- 2003 052 238
- US-A1- 2003 172 756
- US-A1- 2016 157 623

## Beschreibung

Die Erfindung betrifft eine elektromotorisch verstellbare Stützeinrichtung der im Oberbegriff des Anspruchs 1 genannten Art zum Abstützen einer Polsterung eines Sitz- und/oder Liegemöbels, insbesondere einer Matratze eines Bettes.

Derartige Stützeinrichtungen sind, beispielsweise in Form von Lattenrosten, allgemein bekannt.

Durch EP 3 009 052 A2 ist eine elektromotorisch verstellbare Stützeinrichtung der betreffenden Art bekannt, die ein Basisteil und ein Stützteil aufweist, das um eine erste Schwenkachse verschwenkbar mit dem Basisteil verbunden ist. Die Stützeinrichtung weist ferner eine elektromotorische Antriebseinrichtung auf, die zur Schwenkverstellung des Stützteils relativ zu dem Basisteil mit dem Basisteil und dem Stützteil in Wirkungsverbindung steht, wobei das Basisteil und das Stützteil derart ausgebildet sind und mit der Antriebseinrichtung in Wirkungsverbindung stehen, dass das Stützteil zwischen einer unverstellten Ausgangsposition, in der der Stützteil flach auf dem Basisteil aufliegt, und einer Endposition der Verstellbewegung verstellbar ist, in der das Stützteil winkelig zu dem Basisteil angeordnet ist. Die aus der Druckschrift bekannte Stützeinrichtung ist als Nachrüstsatz konzipiert, mittels dessen eine nicht motorisierte Stützeinrichtung mit der Funktionalität einer elektromotorischen Verstellung nachgerüstet werden kann. Hierzu wird der Nachrüstsatz beispielsweise im Bereich eines Kopfteiles eines Lattenrostes zwischen denselben und die Matratze eingelegt. Durch elektromotorische Verstellung des Stützeils relativ zu dem Basisteil des Nachrüstsatzes kann dann die Matratze im Bereich des Kopfteiles des Lattenrostes elektromotorisch verstellt werden, sodass der Lattenrost mit der Funktionalität einer elektromotorischen Verstellung nachgerüstet ist.

US 2003/172756 A1 offenbart eine Elektromotorisch verstellbare Stützeinrichtung gemäß dem Stand der Technik.

Der Erfindung liegt die Aufgabe zugrunde, eine Stützeinrichtung der im Oberbegriff des Anspruchs 1 genannten Art anzugeben, die gegenüber der aus der Druckschrift bekannten, als Nachrüstsatz konzipierten Stützeinrichtung verbessert ist.

Diese Aufgabe wird durch die im Anspruch 1 angegebene Erfindung gelöst.

Die Erfindung sieht vor, dass die elektromotorische Antriebseinrichtung einen Spindeltrieb aufweist, der eine ortsfeste, drehbar gelagerte Gewindespindel aufweist, die mit einem Elektromotor der Antriebseinrichtung in Drehantriebsverbindung steht und auf der eine in Axialrichtung der Gewindespindel bewegliche Spindelmutter angeordnet ist, die das Abtriebsorgan der elektromotorischen Antriebseinrichtung bildet, wobei im Bereich der Schwenkachse an dem Basisteil wenigstens ein erstes keilartiges Hubführungselement und an dem Stützteil dem ersten keilartigen Hubführungselement gegenüberliegend wenigstens ein zweites keilartiges Hubführungselement angeordnet ist und wobei die Hubführungselemente in der Bewegungsbahn eines freien Endes eines Stößels angeordnet sind, dessen anderes Ende gelenkig und um eine zu der ersten Schwenkachse parallele zweite Schwenkachse verschwenkbar mit der Spindelmutter verbunden ist, derart, dass zum Verschwenken des Stützteils relativ zu dem Basisteil das freie Ende des Stößels gegen die Hubführungselemente drückt.

Die Erfindung stellt eine Stützeinrichtung bereit, die einfach und robust aufgebaut ist und eine Verstellung auch unter großer Last ermöglicht. Dies wird erfindungsgemäß dadurch erreicht, dass sich die Erfindung hinsichtlich des Zusammenwirkens des Stößels mit den Hubführungselementen das Prinzip eines Keiles zu Nutze macht.

Ein besonderer Vorteil der erfindungsgemäßen Stützeinrichtung besteht darin, dass sie eine besonders geringe Bauhöhe aufweist.

Die erfindungsgemäße Stützeinrichtung kann deshalb insbesondere auch zur Nachrüstung einer nicht motorisierten Stützeinrichtung, beispielsweise in Form eines Lattenrostes, mit der Funktionalität einer elektromotorischen Verstellung verwendet werden.

Die erfindungsgemäße Stützeinrichtung kann mit beliebigen Sitz- und/oder Liegemöbeln oder anderen Möbeln verwendet werden, beispielsweise und insbesondere mit Betten oder dergleichen Liegemöbeln sowie Sesseln. Bei einem Sessel kann eine erfindungsgemäße Stützeinrichtung beispielsweise und insbesondere als Aufstehhilfe verwendet werden. Hierzu wird eine erfindungsgemäße Stützeinrichtung auf eine Sitzfläche eines Sessels aufgelegt, sodass die Oberseite des Stützteil ist der Stützeinrichtung, gegebenenfalls unter Verwendung einer aufgelegten Polsterung, beispielsweise eines Kissens, dann die Sitzfläche des Sessels bildet. Durch Verstellen des Stützteiles relativ zu dem Basisteil kann die so gebildete Sitzfläche geneigt werden, sodass einem Benutzer das Aufstehen erleichtert ist. In einem solchen Fall ist die Größe der Fläche der Stützeinrichtung an die Größe der Sitzfläche des Sessels angepasst, sodass sich die Stützeinrichtung funktional und optisch vorteilhaft in den Sessel einpasst. Eine entsprechende Verwendung einer erfindungsgemäßen Stützeinrichtung hat für sich einen eigenständigen erfinderischen Gehalt.

Besonders geeignet ist die erfindungsgemäße Stützeinrichtung auch, um Krankenhaus- oder Pflegebetten mit der Funktionalität einer elektromotorischen Verstellung temporär oder dauerhaft nachzurüsten.

Darüber hinaus ist die erfindungsgemäße Stützeinrichtung beispielsweise auch gut geeignet, um Hotelbetten insbesondere temporär mit der Funktionalität einer elektromotorischen Verstellung nachzurüsten.

Form, Größe und Ausgestaltung des oder jedes Hubführungselements aufgrund sind entsprechend den jeweiligen Anforderungen und Gegebenheiten innerhalb weiter Grenzen wählbar. Eine Weiterbildung der Erfindung sieht insoweit vor, dass jedes Hubführungselement einen sich von seinem der ersten Schwenkachse abgewandten Ende zu seinen der ersten Schwenkachse zugewandten Ende hin wenigstens abschnittsweise erweiternden Querschnitt aufweist. Die bei einer Linearbewegung des Stößels sich ergebende Kinematik der Verstellbewegung ergibt sich aus der jeweiligen Ausgestaltung der Form der Hubführungselemente.

Grundsätzlich kann wenigstens eines der Hubführungselemente als Keil ausgebildet sein. Eine vorteilhafte Weiterbildung der Erfindung sieht jedoch vor, dass wenigstens ein Hubführungselement eine im Querschnitt wenigstens abschnittsweise bogenförmig ausgebildete Anlagefläche für das freie Ende des Stößels aufweist. Durch entsprechende Wahl des Kurvenverlaufes des Bogens ist insbesondere der Kraft-Weg-Verlauf bei der Verstellung bei der Konstruktion der Stützeinrichtung wählbar.

Eine andere vorteilhafte Weiterbildung der Erfindung sieht vor, dass an dem Basisteil zwei in Radialrichtung der Gewindespindel zueinander beabstandete erste Hubführungselemente angeordnet sind, wobei der Abstand der Hubführungselemente zueinander so gewählt ist, dass der Stößel im Bereich der Endlage der Verstellbewegung zwischen den Hubführungselementen geführt ist.

Um die Reibung beim Zusammenwirken des freien Endes des Stößels mit den Hubführungselementen zu verringern, sieht eine andere vorteilhafte Weiterbildung der Erfindung vor, dass an dem freien Ende des Stößels wenigstens eine drehbar gelagerte Rolle zur Anlage an einer Anlagefläche eines Hubführungselements angeordnet ist.

Eine Weiterbildung der vorgenannten Ausführungsform sieht vor, dass an dem freien Ende des Stößels zwei in Radialrichtung der Gewindespindel zueinander beabstandete Rollen zur Anlage an den ersten Hubführungselementen des Basisteiles angeordnet sind, zwischen denen eine weitere Rolle zur Anlage an dem zweiten Hubführungselement des Stützteils angeordnet ist.

Zum Gegenstand der Erfindung und Offenbarungsgehalt der vorliegenden Anmeldung gehören auch Ausführungsformen, bei denen ein einzelnes keilartiges Hubführungselement verwendet wird, das an dem Basisteil oder dem Stützteil angeordnet ist und mit einem an dem anderen Teil angeordneten beweglichen, insbesondere linear beweglichen Verstellelement derart in Wirkungsverbindung steht, dass bei einer Bewegung des Verstellelements das Stützteil relativ zu dem Basisteil verschwenkt wird, insbesondere durch Kontakt des Verstellelements oder eines damit verbundenen Bauteils mit dem Hubführungselement.

Die Erfindung wird nachfolgend anhand eines Ausführungsbeispiels unter Bezugnahme auf die beigefügte Zeichnung näher erläutert. Dabei bilden alle in der Beschreibung beschriebenen, in der Zeichnung dargestellten und in den Patentansprüchen beanspruchten Merkmale für sich genommen sowie in beliebiger geeigneter Kombination miteinander den Gegenstand der Erfindung, unabhängig von ihrer Zusammenfassung in den Patentansprüchen und deren Rückbezügen sowie unabhängig von ihrer Beschreibung bzw. Darstellung in der Zeichnung.

Es zeigt:
- Fig. 1: in einer Seitenansicht ein Ausführungsbeispiel einer erfindungsgemäßen Stützeinrichtung in einer unverstellten Ausgangsposition,
- Fig. 2: in einer Perspektivansicht die Stützeinrichtung gemäß Fig. 1 in der unverstellten Ausgangsposition,
- Fig. 3: in gleicher Darstellung wie Fig. 1 die Stützeinrichtung gemäß Fig. 1 in der Endposition der Verstellbewegung,
- Fig. 4: in gleicher Darstellung wie Fig. 2 die Stützeinrichtung gemäß Fig. 1 in der Endposition der Verstellbewegung,
- Fig. 5: in gleicher Darstellung wie Fig. 2 die Stützeinrichtung gemäß Fig. 2, wobei ein Stützflächenteil des Stützteils weggelassen ist,
- Fig. 6: in ähnlicher Darstellung wie Fig. 4 die Stützeinrichtung gemäß Fig. 4, wobei ein Stützflächenteil des Stützteils weggelassen ist,
- Fig. 7: in gleicher Darstellung wie Fig. 6, jedoch in gegenüber Fig. 6 vergrößertem Maßstab eine Einzelheit der Stützeinrichtung gemäß Fig. 6, wobei der Grundkörper des Basisteils weggelassen ist,
- Fig. 8: in gleicher Darstellung wie Fig. 7, jedoch in gegenüber Fig. 7 vergrößertem Maßstab eine Einzelheit der Stützeinrichtung gemäß Fig. 7 im Bereich Schwenkachse zwischen dem Basisteil und dem Stützteil und
- Fig. 9: in gleicher Darstellung wie Fig. 6, jedoch in gegenüber Fig. 6 vergrößertem Maßstab eine Einzelheit der Stützeinrichtung gemäß Fig. 6 im Bereich einer elektromotorischen Antriebseinrichtung.

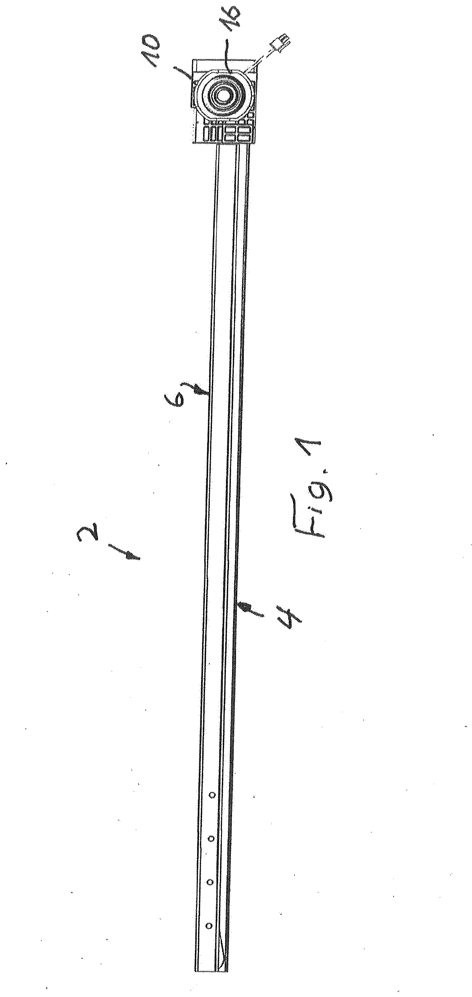

Unter Bezugnahme auf Fig. 1 bis 9 wird nachfolgend ein Ausführungsbeispiel einer erfindungsgemäßen elektromotorisch verstellbaren Stützeinrichtung zum Abstützen einer Polsterung eines Sitz- und/oder Liegemöbels näher erläutert. Aus Darstellungsgründen sind in einigen Figuren Bauteile weggelassen. Die weggelassenen Bauteile sind in den entsprechenden Figuren gedanklich entsprechend zu ergänzen.

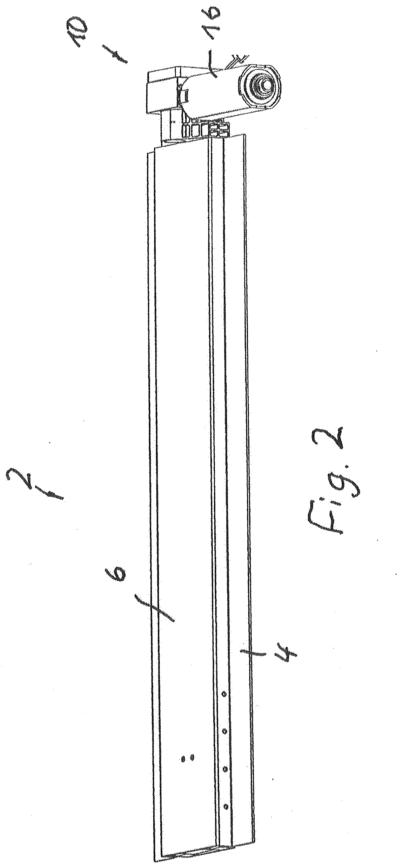

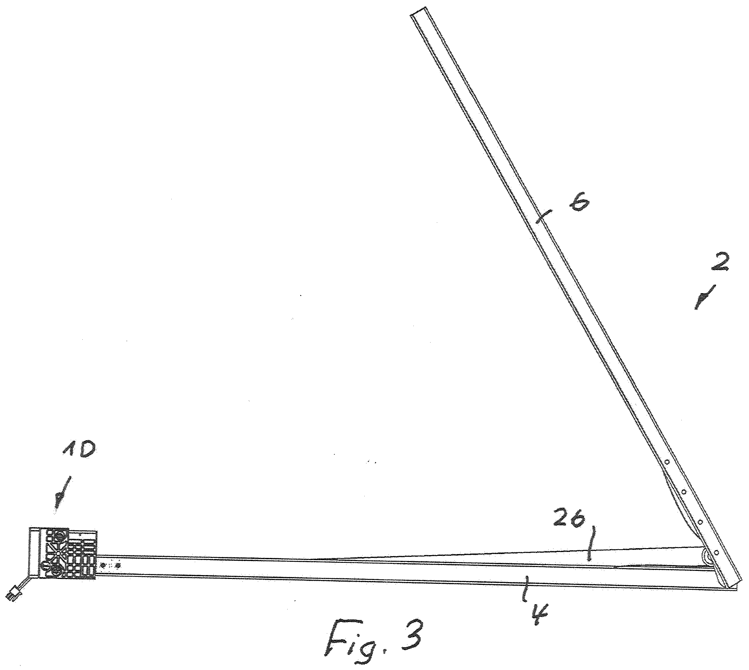

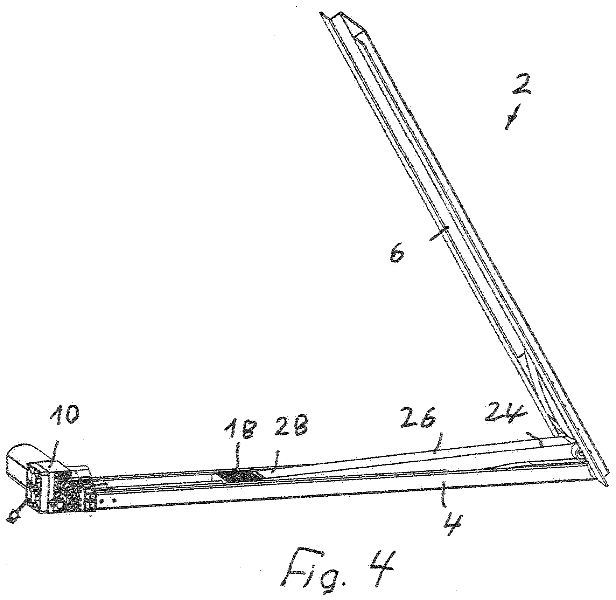

In der Zeichnung zeigen Fig. 1 und Fig. 2 in einer Seitenansicht bzw. einer Perspektivansicht ein Ausführungsbeispiel einer erfindungsgemäßen elektromotorisch verstellbaren Stützeinrichtung 2 in der unverstellten Ausgangsposition, während Fig. 3 und Fig. 4 die Stützeinrichtung 2 in einer Seitenansicht bzw. einer Perspektivansicht in der Endposition der Verstellbewegung zeigen.

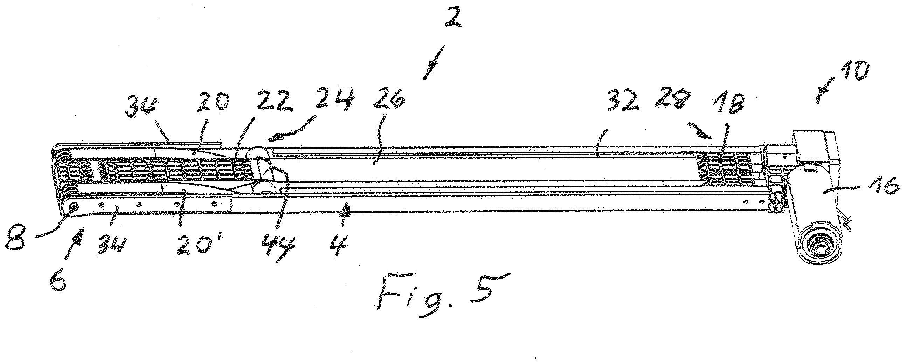

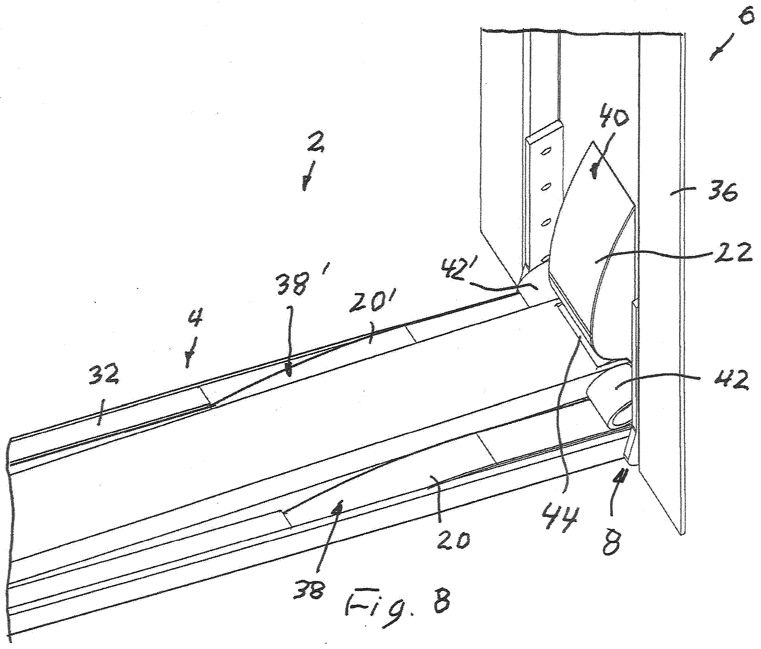

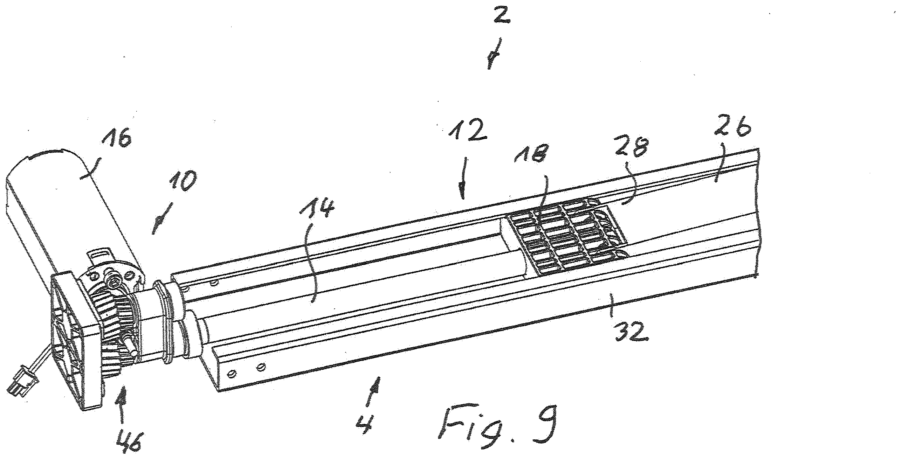

Die Stützeinrichtung 2 weist ein Basisteil 4 und ein Stützteil 6 auf, das um eine erste Schwenkachse 8 (vgl. Fig. 5 und Fig. 8) schwenkbar mit dem Basisteil 4 verbunden ist. Die Stützeinrichtung 2 weist ferner eine elektromotorische Antriebseinrichtung 10 auf, die weiter unten anhand von Fig. 9 näher erläutert wird. Das Basisteil 4 und das Stützteil 6 haben annähernd die gleiche Fläche.

Das Basisteil 4 und das Stützteil 6 sind derart ausgebildet und stehen derart mit der Antriebseinrichtung 10 in Wirkungsverbindung, dass der Stützteil zwischen der unverstellten Ausgangsposition (vgl. Fig. 1 und Fig. 2) flach auf dem Basisteil 4 aufgelegt und in einer Endposition der Verstellbewegung (vgl. Fig. 3 und Fig. 4) winkelig zu dem Basisteil 4 angeordnet ist.

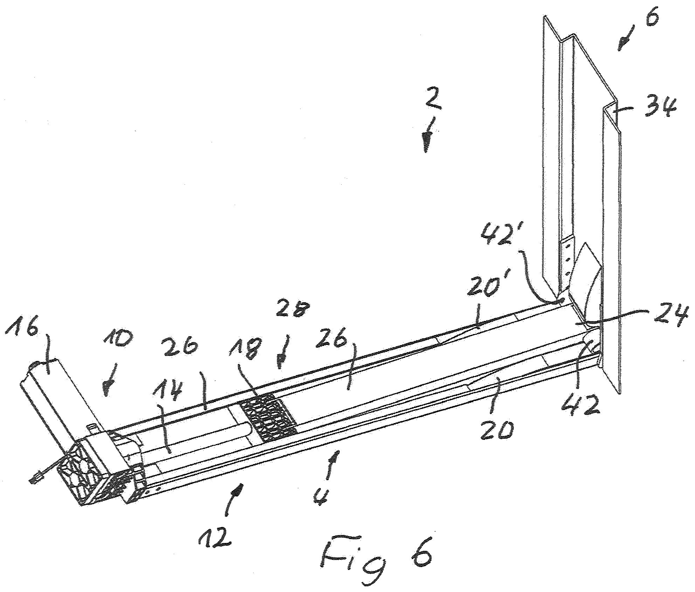

Die elektromotorische Antriebseinrichtung 10 weist einen Spindeltrieb 12 (vergleiche Fig. 6 und Fig. 9) auf, der eine ortsfeste, drehbar gelagerte Gewindespindel 14 aufweist, die mit einem Elektromotor 16 der Antriebseinrichtung 10 in Drehantriebsverbindung steht und auf der eine in Axialrichtung der Gewindespindel 14 bewegliche Spindelmutter 18 angeordnet ist, die das Abtriebsorgan der elektromotorischen Antriebseinrichtung 10 bildet.

Erfindungsgemäß ist im Bereich der ersten Schwenkachse 8 an dem Basisteil 4 wenigstens ein erstes keilartiges Hubführungselement 20 und an dem Stützteil 6 dem ersten keilartigen Hubführungselement gegenüberliegend wenigstens ein zweites keilartiges Hubführungselement 22 angeordnet.

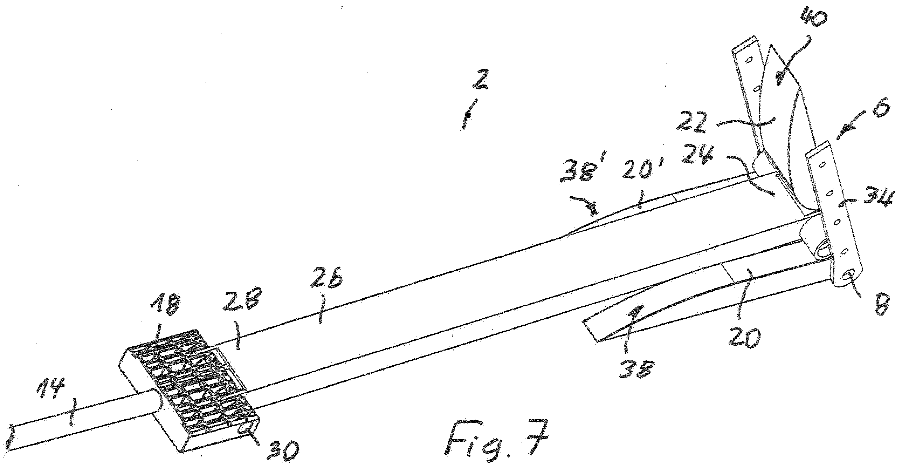

Erfindungsgemäß sind die Hubführungselemente 20, 22 in der Bewegungsbahn eines freien Endes 24 eines Stößels 26 angeordnet (vgl. Fig. 5 und Fig. 6), dessen anderes Ende 28 gelenkig und um eine zu der ersten Schwenkachse 8 parallele zweite Schwenkachse 30 (vgl. Fig. 7) verschwenkbar mit der Spindelmutter 18 verbunden ist, derart, dass zum Verschwenken des Stützteils 6 relativ zu dem Basisteil 4 das freie Ende 24 des Stößels gegen die Hubführungselemente 20, 22 drückt.

Das Basisteil 4 weist einen Grundkörper auf, der durch eine Profilschiene 32 aus Metall gebildet ist, die eine in Axialrichtung der Gewindespindel 14 verlaufende Linearführung bildet, in der die Spindelmutter 18 verdrehsicher geführt ist.

Fig. 6 zeigt die Stützeinrichtung 2 in der Endposition der Verstellbewegung. Das Stützteil 6 besteht aus einem Halteteil 34 und einem Stützflächenteil 36, das aus Gründen der Vereinfachung der Darstellung in Fig. 6 und den folgenden Figuren weggelassen ist.

Fig. 7 und Fig. 8 zeigen jeweils eine Einzelheit aus Fig. 6 im Bereich der ersten Schwenkachse 8, wobei in Fig. 7 aus Gründen der Veranschaulichung die Profilschiene 32 weggelassen ist.

Insbesondere aus Fig. 7 ist ersichtlich, dass bei den dargestellten Ausführungsbeispiel an dem Basisteil 4 zwei in Radialrichtung der Gewindespindel 14 zueinander beabstandete erste Hubführungselemente 20, 20' angeordnet sind, wobei der Abstand der Hubführungselemente 20, 20' so gewählt ist, dass der Stößel im Bereich der Endlage der Verstellbewegung zwischen den ersten Hubführungselementen 20, 20' aufgenommen ist.

Insbesondere aus Fig. 7 ist ferner ersichtlich, dass jedes Hubführungselement 20, 20', 22 einen sich von seinem der ersten Schwenkachse 8 abgewandten Ende zu seinem der ersten Schwenkachse 8 zugewandten Ende hin wenigstens abschnittsweise erweiternden Querschnitt aufweist und dass jedes Hubführungselement 20, 20', 22 eine im Querschnitt wenigstens abschnittsweise bogenförmig ausgebildete Anlagefläche 38, 38' bzw. 40 für das freie Ende des Stößels 26 aufweist.

Die Form der Anlageflächen 38, 38' und 40 legt die Kinematik fest, mit der das Stützteil 6 bei einer Bewegung der Spindelmutter 18 entlang der Gewindespindel 14 verstellt wird.

An dem freien Ende des Stößels sind zwei in Radialrichtung der Gewindespindel zueinander beabstandete Rollen 42, 42' zur Anlage an den ersten Hubführungselementen 20, 20' des Basisteiles angeordnet, zwischen denen eine weitere Rolle 44 zur Anlage an dem zweiten Hubführungselement 22 des Stützteils 6 angeordnet ist.

Fig. 9 zeigt eine Einzelheit aus Fig. 4 im Bereich der elektromotorischen Antriebseinrichtung 10, deren Elektromotor 16 über ein Schneckengetriebe 46, dessen Getriebegehäuse aus Gründen der Veranschaulichung in Fig. 9 weggelassen ist, mit der Gewindespindel 14 in Drehantriebsverbindung steht, sodass sich entsprechend der Drehrichtung der Abtriebswelle des Elektromotor 16 und damit der Drehrichtung der Gewindespindel 14 die Spindelmutter 18 in Fig. 9 nach rechts (entsprechend einer Verstellung des Stützteils 6 aus der unverstellten Ausgangsposition in Richtung auf die Endposition der Verstellbewegung) oder nach links (entsprechend einer Rückstellung des Stützteils 6 aus der Endposition oder einer anderen Position der Verstellbewegung zurück in die Ausgangslage der Verstellbewegung) bewegt.

Der Aufbau einer entsprechenden elektromotorischen Antriebseinrichtung einschließlich Spannungsversorgungs- und Steuerungsmitteln ist dem Fachmann allgemein bekannt und wird daher hier nicht näher erläutert.

Zur Vereinfachung der Darstellung sind Federelemente, beispielsweise in Form von federnden Latten aus Kunststoff oder Federhölzern, die an dem Stützteil 6 angeordnet sind, in der Zeichnung nicht dargestellt. Der Aufbau entsprechender Federelemente ist dem Fachmann ebenfalls bekannt und wird daher hier nicht näher erläutert.

Die Funktionsweise der erfindungsgemäßen Stützeinrichtung 2 ist wie folgt:
In der unverstellten Ausgangsposition befindet sich die Spindelmutter 18 an dem der elektromotorischen Antriebseinrichtung 10 zugewandten Ende der Gewindespindel 14, wie beispielsweise aus Fig. 5 ersichtlich ist. In dieser Position befindet sich das freie Ende des Stößels 26 außer Eingriff von den Hubführungselementen 20, 20' bzw. 22.

Ausgehend von dieser Ausgangsposition treibt der Elektromotor 16 die Gewindespindel 14 so an, dass sich die Spindelmutter 18 in Fig. 5 nach links bewegt.

Hierbei gelangt das freie Ende 24 des Stößels 26 in Eingriff mit den Hubführungselementen 20, 20'und 22 und drückt gegen dieselben, wobei die Rollen 42, 42' auf den Anlageflächen 38, 38' der ersten Hubführungselemente 20, 20' und die Rolle 44 auf der Anlagefläche 40 des zweiten Hubführungselements 22 abrollen. Aufgrund der resultierenden Keilwirkung wird hierbei das Stützteil 6 relativ zu dem Basisteil 4 in Fig. 5 entgegen dem Uhrzeigersinn verschwenkt, bis die in Fig. 6 dargestellte Endposition der Verstellbewegung erreicht ist.

Aufgrund ihrer besonders flachen Bauform ist die erfindungsgemäßen Stützeinrichtung 2 besonders für eine Nachrüstung geeignet, um beispielsweise eine nicht motorisierte Stützeinrichtung, beispielsweise in Form eines Lattenrostes, temporär oder dauerhaft mit der Funktionalität einer elektromotorischen Verstellung nachzurüsten, indem die Stützeinrichtung 2 zwischen den Lattenrost und eine Matratze oder andere Polsterung eingelegt wird. Die in Fig. 1 dargestellte Ausgangsposition der Verstellbewegung entspricht dann einer Liegeposition, während die in Fig. 3 dargestellte Endposition der Verstellbewegung einer Sitzposition entspricht.

## Patentansprüche

1. Elektromotorisch verstellbare Stützeinrichtung (2) zum Abstützen einer Polsterung eines Sitz- und/oder Liegemöbels, insbesondere einer Matratze eines Bettes,
mit einem Basisteil (4),
mit einem Stützteil (6), das um eine erste Schwenkachse (8) verschwenkbar mit dem Basisteil (4) verbunden ist und
mit einer elektromotorischen Antriebseinrichtung (10), die zur Schwenkverstellung des Stützteils (6) relativ zu dem Basisteil (4) mit dem Basisteil (4) und dem Stützteil (6) in Wirkungsverbindung steht,
wobei das Basisteil (4) und das Stützteil (6) derart ausgebildet sind und derart mit der Antriebseinrichtung (10) in Wirkungsverbindung stehen, dass das Stützteil (6) zwischen einer unverstellten Ausgangsposition, in der das Stützteil (6) flach auf dem Basisteil (4) aufliegt, und einer Endposition der Verstellbewegung verstellbar ist, in der das Stützteil (6) winkelig zu dem Basisteil (4) angeordnet ist,
**dadurch gekennzeichnet,**
**dass** die elektromotorische Antriebseinrichtung (10) einen Spindeltrieb (12) aufweist, der eine ortsfeste, drehbar gelagerte Gewindespindel (14) aufweist, die mit einem Elektromotor (16) der Antriebseinrichtung in Drehantriebsverbindung steht und auf der eine in Axialrichtung der Gewindespindel (14) bewegliche Spindelmutter (18) angeordnet ist, die das Abtriebsorgan der elektromotorischen Antriebseinrichtung (10) bildet,
**dass** im Bereich der ersten Schwenkachse (8) an dem Basisteil (4) wenigstens ein erstes keilartiges Hubführungselement (20, 20') und an dem Stützteil dem ersten keilartigen Hubführungselement (20, 20') gegenüberliegend wenigstens ein zweites keilartiges Hubführungselement (22) angeordnet ist und
**dass** die Hubführungselemente (20, 20', 22) in der Bewegungsbahn eines freien Endes (24) eines Stößels (26) angeordnet sind, dessen anderes Ende gelenkig und um eine zu der ersten Schwenkachse (8) parallele zweite Schwenkachse (30) verschwenkbar mit der Spindelmutter (18) verbunden ist, derart, dass zum Verschwenken des Stützteils (6) relativ zu dem Basisteil (4) das freie Ende des Stößels (26) gegen die Hubführungselemente (20, 20', 22) drückt.

2. Stützeinrichtung nach Anspruch 1, **dadurch gekennzeichnet, dass** wenigstens ein Hubführungselement (20, 20', 22) einen sich von seinem der ersten Schwenkachse (8) abgewandten Ende zu seinem der ersten Schwenkachse (8) zugewandten Ende hin wenigstens abschnttsweise erweiternden Querschnitt aufweist.

3. Stützeinrichtung nach Anspruch 1 oder 2, **dadurch gekennzeichnet, dass** wenigstens ein Hubführungselement (20, 20', 22) eine im Querschnitt wenigstens abschnittsweise bogenförmig ausgebildete Anlagefläche (38, 40) für das freie Ende (24) des Stößels (26) aufweist.

4. Stützeinrichtung nach einem der vorhergehenden Ansprüche, **dadurch gekennzeichnet, dass** an dem Basisteil (4) zwei in Radialrichtung der Gewindespindel (14) zueinander beabstandete erste Hubführungselemente spezifisch angeordnet sind, wobei der Abstand der Hubführungselemente (20, 20') so gewählt ist, dass der Stößel (26) im Bereich der Endlage der Verstellbewegung zwischen den Hubführungselementen (20, 20') geführt ist.

5. Stützeinrichtung nach einem der vorhergehenden Ansprüche, **dadurch gekennzeichnet, dass** an dem freien Ende (24) des Stößels (26) wenigstens eine drehbar gelagerte Rolle (42, 42' bzw. 44) zur Anlage an einer Anlagefläche (38 bzw. 40) eines Hubführungselements (20 bzw. 22) angeordnet ist.

6. Stützeinrichtung nach Anspruch 5, **dadurch gekennzeichnet, dass** an dem freien Ende (24) des Stößels (26) zwei in Radialrichtung der Gewindespindel (14) zueinander beabstandete Rollen (42, 42') zur Anlage an den ersten Hubführungselementen (20, 20') des Basisteiles (4) angeordnet sind, zwischen denen eine weitere Rolle (44) zur Anlage an dem zweiten Hubführungselement (22) des Stützteils (6) angeordnet ist.

## Claims

1. A support device (2) adjustable with an electric motor for supporting the upholstery of a piece of seating and/or reclining furniture, in particular a mattress of a bed,
with a base part (4),
with a support part (6), which is connected to the base part (4) so as to be pivotable about a first pivot axis (8), and
with an electromotive drive device (10), which is in operative connection with the base part (4) and the support part (6) for pivoting adjustment of the support part (6) relative to the base part (4),
wherein the base part (4) and the support part (6) are configured and operatively connected to the drive device (10) in such a way that the support part (6) can be adjusted between an unadjusted starting position, in which the support part (6) rests flat on the base part (4), and an end position of the adjustment movement, in which the support part (6) is arranged at an angle to the base part (4),
**characterized**
**in that** the electromotive drive device (10) has a spindle drive (12) which has a stationary, rotatably mounted threaded spindle (14) which is in rotary drive connection with an electric motor (16) of the drive device and on which is arranged a spindle nut (18) which is movable in the axial direction of the threaded spindle (14) and forms the output member of the electromotive drive device (10),
**in that** at least one first wedge-like lifting guide element (20, 20') is arranged on the base part (4) in the region of the first pivot axis (8) and at least one second wedge-like lifting guide element (22) is arranged on the support part opposite the first wedge-like lifting guide element (20, 20'), and
**in that** the lifting guide elements (20, 20', 22) are arranged in the path of movement of a free end (24) of a plunger (26), the other end of which is connected to the spindle nut (18) in an articulated manner and pivotably about a second pivot axis (30) parallel to the first pivot axis (8) in such a way that the free end of the plunger (26) presses against the lifting guide elements (20, 20', 22) in order to pivot the support part (6) relative to the base part (4).

2. The support device according to claim 1, **characterized in that** at least one lifting guide element (20, 20', 22) has a cross-section which widens at least partially from its end facing away from the first pivot axis (8) towards its end facing the first pivot axis (8).

3. The support device according to claim 1 or 2, **characterized in that** at least one lifting guide element (20, 20', 22) has a contact surface (38, 40) of at least partially arcuate cross-section for the free end (24) of the plunger (26).

4. The support device according to any one of the preceding claims, **characterized in that** two first lifting guide elements spaced apart from one another in the radial direction of the threaded spindle (14) are specifically arranged on the base part (4), the spacing of the lifting guide elements (20, 20') being selected such that the plunger (26) is guided between the lifting guide elements (20, 20') in the region of the end position of the adjustment movement.

5. The support device according to any one of the preceding claims, **characterized in that** at least one rotatably mounted roller (42, 42' or 44) is arranged at the free end (24) of the plunger (26) to contact a contact surface (38 or 40) of a lifting guide element (20 or 22).

6. The support device according to claim 5, **characterized in that** two rollers (42, 42') spaced apart from one another in the radial direction of the threaded spindle (14) are arranged at the free end (24) of the plunger (26) for contacting the first lifting guide elements (20, 20') of the base part (4), between which a further roller (44) is arranged for contacting the second lifting guide element (22) of the support part (6).

## Revendications

1. Dispositif d'appui (2) à réglage par moteur électrique pour appuyer un rembourrage d'un meuble d'assise et/ou de couchage, notamment un matelas d'un lit,
avec une partie de base (4),
avec une partie d'appui (6) qui est reliée à la partie de base (4) de manière à pouvoir pivoter autour d'un premier axe de pivotement (8) et
avec un dispositif d'entraînement à moteur électrique (10) qui est en liaison active avec la partie de base (4) et la partie d'appui (6) pour le réglage pivotant de la partie d'appui (6) par rapport à la partie de base (4),
la partie de base (4) et la partie d'appui (6) étant réalisées de telle sorte et étant en liaison active avec le dispositif d'entraînement (10) de telle sorte que la partie d'appui (6) peut être réglée entre une position initiale non réglée, dans laquelle la partie d'appui (6) repose à plat sur la partie de base (4), et une position finale du mouvement de réglage, dans laquelle la partie d'appui (6) est disposée angulairement par rapport à la partie de base (4),
**caractérisé**
**en ce que** le dispositif d'entraînement à moteur électrique (10) présente un entraînement à broche (12) qui présente une broche filetée (14) fixe, montée à rotation, qui est en liaison d'entraînement en rotation avec un moteur électrique (16) du dispositif d'entraînement et sur laquelle est disposé un écrou de broche (18), qui est mobile dans la direction axiale de la broche filetée (14) et qui forme l'organe de sortie du dispositif d'entraînement à moteur électrique (10),
**en ce que**, dans la zone du premier axe de pivotement (8), au moins un premier élément de guidage de course en forme de coin (20, 20') est disposé sur la partie de base (4) et, sur la partie d'appui, au moins un deuxième élément de guidage de course en forme de coin (22) est disposé en face du premier élément de guidage de course en forme de coin (20, 20'), et
**en ce que** les éléments de guidage de course (20, 20', 22) sont disposés dans la trajectoire de déplacement d'une extrémité libre (24) d'un coulisseau (26) dont l'autre extrémité est reliée à l'écrou de broche (18) de manière articulée et de manière à pouvoir pivoter autour d'un deuxième axe de pivotement (30) parallèle au premier axe de pivotement (8), de telle sorte que pour faire pivoter la partie de support (6) par rapport à la partie de base (4), l'extrémité libre du coulisseau (26) appuie contre les éléments de guidage de course (20, 20', 22).

2. Dispositif d'appui selon la revendication 1, **caractérisé en ce qu'**au moins un élément de guidage de course (20, 20', 22) présente une section transversale s'élargissant au moins partiellement depuis son extrémité opposée au premier axe de pivotement (8) vers son extrémité tournée vers le premier axe de pivotement (8).

3. Dispositif d'appui selon la revendication 1 ou 2, **caractérisé en ce qu'**au moins un élément de guidage de course (20, 20', 22) présente une surface de contact (38, 40) réalisée en forme d'arc en section transversale au moins par sections pour l'extrémité libre (24) du coulisseau (26).

4. Dispositif d'appui selon l'une quelconque des revendications précédentes, **caractérisé en ce que** deux premiers éléments de guidage de course espacés l'un de l'autre dans la direction radiale de la broche filetée (14) sont disposés spécifiquement sur la partie de base (4), l'espacement des éléments de guidage de course (20, 20') étant choisi de telle sorte que le coulisseau (26) est guidé entre les éléments de guidage de course (20, 20') dans la zone de la position finale du mouvement de réglage.

5. Dispositif d'appui selon l'une quelconque des revendications précédentes, **caractérisé en ce qu'**à l'extrémité libre (24) du coulisseau (26) est disposé au moins un rouleau (42, 42' ou 44) monté rotatif pour s'appliquer contre une surface de contact (38 ou 40) d'un élément de guidage de course (20 ou 22).

6. Dispositif d'appui selon la revendication 5, **caractérisé en ce qu'**à l'extrémité libre (24) du coulisseau (26) sont disposés deux rouleaux (42, 42') espacés l'un de l'autre dans la direction radiale de la broche filetée (14) pour s'appliquer contre les premiers éléments de guidage de course (20, 20') de la partie de base (4), entre lesquels est disposé un autre rouleau (44) pour s'appliquer contre le deuxième élément de guidage de course (22) de la partie d'appui (6).
